# FASCICULE DE BREVET EUROPEEN

(11) **EP 2 280 254 B1**
(45) Date de publication et mention de la délivrance du brevet: **15.02.2012**
(21) Numéro de dépôt: 10170625.7
(22) Date de dépôt: 23.07.2010
(51) Int. Cl.: G01G 3/13, G01G 3/16

(54) **Support pour élément mince, microbalance à quartz comportant un tel support et porte-échantillon comportant un tel support**
Halterung für ein dünnes Element, eine Quarzmikrowaage, die eine solche Halterung umfasst und ein Probenträger, der eine solche Halterung umfasst
Support for a thin element, a quartz microbalance including such a support and a sample-holder including such a support

(30) Priorité: 28.07.2009 FR 0955269
(43) Date de publication de la demande: 02.02.2011
(73) Titulaire: Commissariat à l'Énergie Atomique et aux Énergies Alternatives, 75015 Paris (FR)
(72) Inventeur: Pernel, Carole, 38120, SAINT EGREVE (FR); Poinard, André, 38140, SAINT PAUL D'IZEAUX (FR)
(74) Mandataire: Ilgart, Jean-Christophe

(56) Documents cités:
- WO-A1-01/63224
- GB-A- 2 348 286
- JP-A- 60 004 819

## Description

### DOMAINE TECHNIQUE ET ART ANTÉRIEUR

La présente invention se rapporte à un support pour un élément mince, cet élément mince pouvant être soit un substrat sur lequel est déposé un échantillon sous forme de film, soit un élément permettant d'effectuer des mesures tel qu'un quartz pour une microbalance à quartz. La présente invention se rapporte également à une microbalance comportant un tel support et à un porte-échantillon comportant un tel support.

Les microbalances à quartz permettent de mesurer la masse d'un dépôt de matériau de l'ordre de quelques nanogrammes en milieu gazeux ou liquide par mesure de la variation de la fréquence de résonance du quartz, le quartz étant un matériau présentant des qualités piézoélectriques. Pour cela, le quartz est recouvert sur ses deux faces d'une couche conductrice, type platine.

Une telle microbalance peut être couplée à des systèmes électrochimiques, appelés cellules électrochimiques dans lesquelles ont lieu les réactions électrochimiques à l'origine de la variation de masse sur la bande de quartz.

La microbalance comporte un boîtier dans lequel est maintenue la bande de quartz. Le boîtier est monté sur la cellule électrochimique. Le boîtier est tel qu'une face de la bande soit découverte, le bain électrochimique de la cellule entrant en contact avec cette face découverte. C'est sur cette face qu'a lieu le dépôt, ou de façon plus générale, les réactions électrochimiques.

Les boîtiers ou supports du quartz des microbalances de l'état de la technique, comme par exemple GB 2348286 A, comportent un grand nombre de pièces. Par exemple, ils comportent un grand nombre de vis et des éléments de support rapportés. Outre le risque de perdre une des pièces, en particulier les vis, le vissage et dévissage usent rapidement les pas de vis. Assez rapidement, l'assemblage n'est plus optimal. Par ailleurs leur étanchéité n'est pas optimale. En outre, le remplacement du quartz est malaisé et demande un démontage quasi-complet du boîtier. Chaque démontage provoque une détérioration du support, comme cela a été expliqué ci-dessus.

De plus du fait de leur construction et de leur montage sur les cellules électrochimiques, une grande cavité étroite existe au niveau de la surface du quartz en contact avec le liquide. Cette cavité piège des bulles de gaz, qui peuvent perturber les mesures.

Il existe également des dispositifs d'analyse de films minces, les films minces conducteurs ou semi-conducteurs étant déposés sur un substrat. Ces dispositifs présentent les mêmes inconvénients que ceux précédemment cités pour les microbalances.

C'est par conséquent un but de la présente invention d'offrir un support pour élément mince de structure simple permettant une manipulation aisée et un remplacement facile et pratique de l'élément mince.

C'est également un but de la présente invention d'offrir un support pour élément mince réduisant au maximum les risques de piégeage de bulles de gaz au niveau de la surface de l'élément mince en contact avec la solution, par exemple du quartz ou de l'échantillon.

### EXPOSÉ DE L'INVENTION

Le but précédemment énoncé est atteint par un support comportant un boîtier muni d'un épaulement contre lequel est serrée de manière étanche une lame, et par un élément de serrage appliquant un effort à la lame pour la maintenir contre l'épaulement, et assurer un contact étanche de la lame contre l'épaulement, la face de la lame dont la périphérie est en contact avec l'épaulement est destinée à venir en contact avec une solution active. L'autre face se trouve à l'intérieur du boîtier qui est étanche. L'élément de serrage forme également un obturateur étanche du boîtier et coopère par vissage avec le boîtier.

On entend par lame un élément mince pouvant être par exemple une lame de quartz dont l'épaisseur est de l'ordre de quelques centaines de µm ou un film mince.

Ainsi, le démontage et le montage du support sont très simples, puisque celui-ci ne comporte que deux pièces, les vis étant supprimées. Le remplacement de l'élément mince est donc aisé. Il n'y a donc plus de risque de détérioration du support. Par ailleurs, l'étanchéité est obtenue simplement et efficacement par l'effort appliqué par le bouchon sur la lame. Par ailleurs, le support peut être conçu de sorte à rendre la cavité au niveau de la surface de la lame la plus courte possible. En outre, le support offre une étanchéité totale en face avant et en face arrière, il peut donc être immergé dans la solution.

La présente invention a alors principalement pour objet un support pour un élément mince en matériau conducteur électrique ou semi-conducteur dont une face est destinée à être mise en contact avec un milieu liquide ou gazeux, ledit support comportant
- une première pièce munie d'un passage central traversant d'axe longitudinal, ledit passage comportant au moins une première et une deuxième portion de diamètres différents se raccordant par un épaulement, ledit épaulement étant destiné à supporter ledit élément mince,
- une deuxième pièce pénétrant dans le passage par l'extrémité opposée à celle destinée à voir la solution liquide, apte à maintenir l'élément mince sur l'épaulement, la première et la deuxième pièce coopérant par vissage,
- un moyen d'étanchéité entre l'élément mince et l'épaulement.

La deuxième pièce peut comporter une première partie formant bouchon et coopérant par vissage avec la première pièce, une tige montée coulissante par une extrémité dans la première partie, une tête fixée à une deuxième extrémité de la tige et destinée à exercer un effort sur l'élément mince, et un moyen élastique monté en réaction entre la tête et la première partie, de sorte à exercer ledit effort axial sur la tête en direction de l'épaulement.

La portion du passage destinée à entrer en contact avec le liquide a avantageusement une forme tronconique dont le plus grand diamètre est orienté en éloignement de l'épaulement.

Le moyen d'étanchéité entre l'épaulement et l'élément mince peut être un joint torique ou un bourrelet en saillie de l'épaulement venu de matière avec la première pièce.

La première et la deuxième pièce sont avantageusement réalisées en Téflon®.

Un joint d'étanchéité est par exemple prévu entre la première et la deuxième pièce.

La première pièce peut comporter un passage latéral débouchant dans le passage central au niveau de l'épaulement pour la mise en place de l'élément mince et/ou le passage de moyens de connexion électrique.

La présente invention a également pour objet une microbalance à quartz comportant un support selon la présente invention, et une lame de quartz munie d'une métallisation sur chacune de ses faces, formant l'élément mince, un élément souple annulaire étant interposé entre la tête et la lame de quartz, afin de laisser le quartz libre de vibrer.

La première pièce peut comporter un méplat sur sa périphérie extérieure dans la zone où débouche le passage latéral et une plaque obturant le passage latéral, ladite plaque comportant des perçages pour le passage de connexion électrique.

La présente invention a également pour objet un porte-échantillon comportant un support selon la présente invention et un substrat sous forme de lame recouvert sur l'une de ses faces d'un film à analyser formant l'élément mince, ledit support comportant un élément de contact électrique disposé sur l'épaulement et s'interposant entre le film et l'épaulement, le moyen d'étanchéité étant entre l'épaulement et l'élément mince.

L'élément de contact électrique est avantageusement une rondelle dont la périphérie intérieure est formée par des languettes, lesdites languettes étant pliées de sorte à s'écarter de l'épaulement, permettant le contact électrique avec le film mince.

Le porte-échantillon peut comporter une tige creuse fixée sur la première pièce au niveau du passage latéral, ladite tige étant traversée par une connexion électrique à l'élément de contact électrique.

La présente invention a également pour objet un ensemble de mesure comportant un support selon la présente invention et une cellule électrochimique, sur laquelle le support est fixé, la cellule électrochimique comportant une paroi latérale et un fond définissant un récipient et un orifice latéral dans sa partie inférieure, le support étant fixé sur la cellule électrochimique de sorte que la portion du passage destinée à être en contact avec le liquide soit en regard de l'orifice latéral.

La paroi latérale de la cellule électrochimique peut être munie d'un méplat au niveau de l'orifice latéral, le support étant directement en appui sur le méplat tel que la distance entre le bain électrochimique et la face de l'élément mince soit réduite.

L'ensemble de mesure selon la présente invention peut comporter des moyens de fixation du support en regard de l'orifice latéral, lesdits moyens de fixation comportant un ensemble de deux brides reliées par des tirants maintenant le support contre la cellule électrochimique, une première bride étant en appui sur une zone de la paroi latérale de la cellule électrochimique à l'opposé de l'orifice latéral et une deuxième bride étant en appui sur le support de sorte que l'effort de serrage s'exerce à travers la paroi latérale.

La première bride peut être fixée sur la paroi latérale.

Le support peut comporter une bordure en saillie de la face entourant le passage central, insérée à force dans l'orifice latéral de la cellule électrochimique.

La cellule électrochimique est avantageusement en Téflon®.

### BRÈVE DESCRIPTION DES DESSINS

La présente invention sera mieux comprise à l'aide de la description qui va suivre et des dessins en annexes, sur lesquels :
- la figure 1 est une vue en coupe longitudinale d'un exemple de réalisation d'un support selon la présente invention,
- la figure 2 est une vue en coupe transversale du support de la figure 1,
- la figure 3A est une vue de côté du support de la figure 1,
- la figure 3B est une vue identique à celle de la figure 3A, le quartz ayant été retiré,
- la figure 4 est une vue en coupe transversale du support de la figure 1 en l'absence du quartz,
- les figures 5A est une vue en coupe longitudinale et la figure 5B est une vue de côté d'éléments formant des moyens de maintien appartenant au support,
- la figure 6 est une vue en perspective d'un élément de quartz utilisable dans un support selon la présente invention pour former une microbalance à quartz,
- les figures 7A et 7B sont des vues en perspective et en coupe longitudinale respectivement d'une cellule électrochimique selon un premier mode de réalisation apte à être utilisée avec le support selon la présente invention,
- les figures 8A et 8B sont des vues en coupe longitudinale et en coupe transversale respectivement d'une cellule électrochimique apte à être utilisée avec le support selon la présente invention selon un deuxième mode de réalisation,
- les figures 9A et 9B sont des vues en coupe longitudinale et en coupe transversale respectivement d'une variante de cellule électrochimique des figures 8A et 8B,
- La figure 10 est une vue en perspective d'un porte-échantillon selon la présente invention,
- la figure 11 est une vue en coupe longitudinale du porte-échantillon de la figure 10.
- la figure 12 est une vue en coupe longitudinale d'une cellule électrochimique de l'état de la technique.

### EXPOSÉ DÉTAILLÉ DE MODES DE RÉALISATION PARTICULIERS

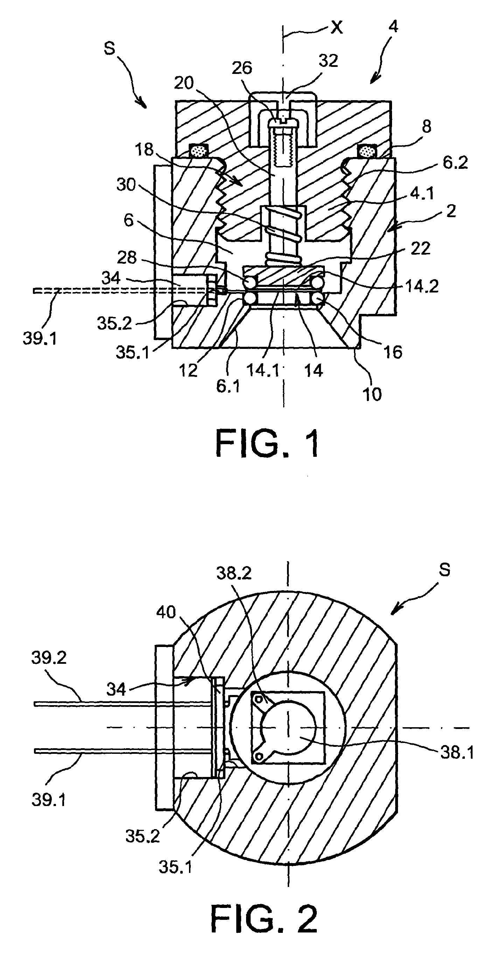

Sur la figure 1, on peut voir une vue en coupe longitudinale d'un exemple de réalisation d'un support S selon la présente invention.

Le support S selon la présente invention peut former soit un support pour microbalance à quartz, soit former un porte-échantillon.

Le support représenté sur les figures 1 à 5B est plus particulièrement adapté à la réalisation d'une microbalance. Nous décrirons également un mode de réalisation plus particulièrement adapté à la réalisation d'un porte-échantillon.

Le support S selon l'invention comporte un boîtier 2, dans lequel sont disposés l'élément à supporter et un dispositif de maintien de l'élément à supporter. Ce dispositif de maintien forme également un obturateur. A des fins de simplicité, le dispositif de maintien sera désigné par « bouchon » dans la suite de la description. Le boîtier 2 comporte un passage traversant 6 d'axe longitudinal X s'étendant d'une première face 8 du boîtier 2 vers une deuxième face 10 opposée à la première face 8. La deuxième face 10 du boitier est destinée à être mis en contact avec un liquide.

Le bouchon 4 obture le passage de manière étanche du côté de la première face 8 du boîtier. Pour cela, le bouchon 4 est introduit dans le passage 6 du côté de la première face 8. Un joint d'étanchéité 11 est prévu entre une gorge de joint du bouchon et la première face 8 du boîtier.

L'immobilisation du bouchon 4 sur le boîtier est obtenue par vissage, pour cela le bouchon 4 comporte une partie 4.1 filetée et le passage 6 comporte une partie taraudée.

Selon la présente invention, le passage 6 comporte un épaulement 12 formant une surface d'appui pour une lame 14 destinée soit à former un susbsrat pour un échantillon à analyser, soit à former une partie d'une microbalance, dans ce dernier cas la lame 14 est par exemple en quartz métallisée sur ses deux faces.

La lame 14 comporte deux faces ; une première face 14.1 est destinée à être orientée vers l'épaulement 12 et à être en contact avec liquide et une deuxième face 14.2 est destinée à être en regard du bouchon 4. Dans le cas d'une lame de quartz, celle-ci mesure moins de 200 µm et est recouverte sur une face d'un film conducteur de l'ordre de 300 nm. Dans le cas d'un substrat recouvert d'un film à analyser, le substrat peut mesurer de l'ordre de 700 µm d'épaisseur et le film peut mesurer de quelques dizaines de nanomètres à quelques centaines de nanomètres d'épaisseur. Dans le cas d'un susbsrat de 100 mm, le film peut avoir une épaisseur de 500 µm ; dans le cas d'un susbsrat de 200 mm, le film peut avoir une épaisseur de 700 µm ; et dans le cas d'un susbsrat de 300 mm, le film peut avoir une épaisseur de 750 µm.

Le substrat peut être en silicium.

Dans la suite de la description nous désignerons cet élément par « lame » uniquement.

Un joint d'étanchéité 16, par exemple un joint torique est interposé entre la face 14.1 de la lame et l'épaulement 12 de sorte à assurer un contact étanche. Ainsi, le passage 6 est divisé de manière étanche en deux portions, une première portion 6.1 située entre l'épaulement 12 et la deuxième face 10 et une deuxième portion 6.2 située entre l'épaulement 12 et la première face 8. La première portion 6.1 forme une fenêtre d'accès à la face 14.1 de la lame 14 pour le liquide.

De manière avantageuse, la première portion 6.1 présente une longueur la plus réduite possible pour éviter de former une cavité favorisant la formation et la rétention de bulles de gaz, tout en étant apte à résister à l'effort de serrage appliqué sur l'élément mince 14. Par ailleurs, dans l'exemple représenté, la première portion 6.1 a avantageusement une section tronconique facilitant l'évacuation des bulles de gaz pouvant éventuellement apparaître.

Le bouchon 4, formant dispositif de maintien, comporte des moyens 18 pour maintenir la lame

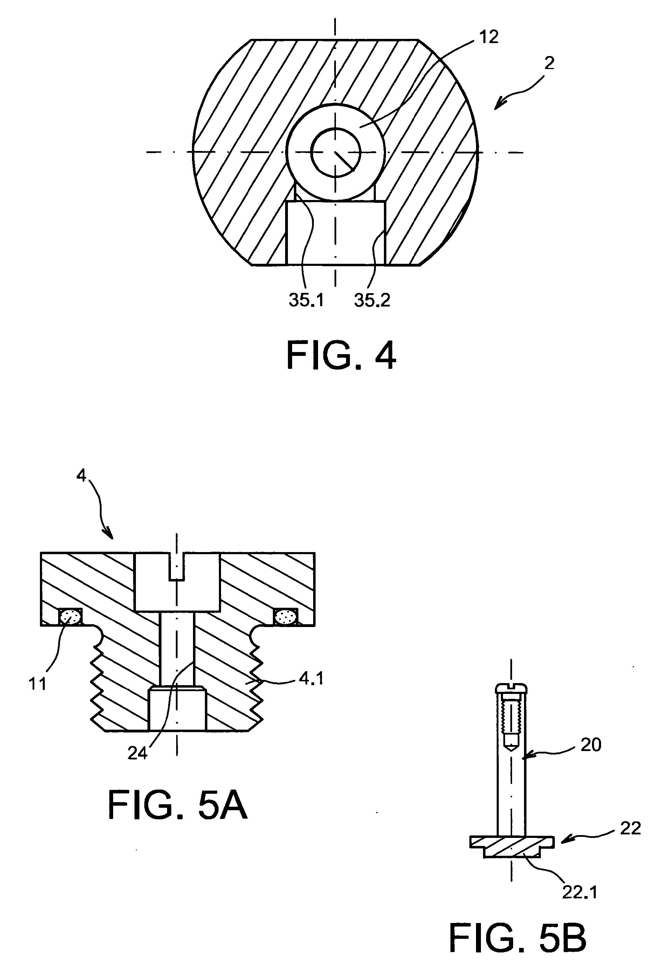

14 contre l'épaulement 12 afin d'assurer l'étanchéité au niveau de l'épaulement 12. Dans l'exemple représenté, les moyens 18 sont formés par une tige 20 (figure 5B) munie à une première extrémité longitudinale d'une tête 22 destinée à venir appliquer un effort sur la lame 14. Le bouchon 4 comporte un alésage longitudinal traversant 24 (figure 5A) dans lequel est montée la tige 20. La tige 20 est apte à coulisser dans l'alésage 24. Un moyen de retenue axial 26 est monté sur la deuxième extrémité longitudinale de la tige 20 évitant que celle-ci ne s'échappe de l'alésage 24.

Lorsque le bouchon 4 est monté sur le boîtier, la tête 22 est située à l'intérieur du boîtier 2.

L'effort axial est généré par un moyen élastique 30 monté en réaction entre la tête 22 et le couvercle 4. Dans l'exemple représenté, il s'agit d'un ressort hélicoïdal. Le montage coulissant de la tige 20 dans le couvercle 4 permet de réduire les risques de détérioration de la lame 14. De plus, ce montage permet un contrôle aisé de l'effort appliqué à la lame 14. La force peut être tarée de sorte que l'étanchéité soit assurée, tout en laissant le quartz vibrer librement. Il suffit pour cela de contraindre plus ou moins le ressort via la longueur entre la tête 22 et le fond de la partie 4.1 du bouchon.

La tête 22 peut venir directement en contact avec la lame 14 ou par l'intermédiaire d'un élément interposé entre la tête 22 et la lame 14. Par exemple, dans le cas d'une microbalance à quartz, le quartz doit être maintenu, cependant il ne faut pas gêner les vibrations du quartz qui permettent de détecter les variations de masse. Pour cela, on prévoit un élément d'interposition 28 annulaire venant uniquement en appui sur le bord extérieur du quartz, permettant son maintien sans gêner sa mise en vibration. Dans l'exemple représenté, l'élément souple 28 est un joint torique similaire au joint torique 16, permettant d'utiliser un nombre réduit de composants différents. Dans cet exemple avantageux, le quartz est maintenu entre deux éléments souples formés par des joints, le quartz est donc libre de vibrer, on atteint alors une plus grande justesse dans les mesures.

Avantageusement, on prévoit que la tête 22 comporte sur sa face destinée à être orientée vers la lame 14 une portion centrale en saillie 22.1 (figure 5B) de diamètre légèrement supérieure à celle du joint 28 permettant un montage et une immobilisation simples du joint 28 sur la tête 22.

Dans le cas où la lame est en quartz pour réaliser une microbalance à quartz, la force exercée par le ressort 30 est adaptée pour maintenir le quartz plaqué contre le joint torique 16 tout en permettant au quartz de vibrer à sa fréquence de résonnance. Par exemple, pour une surface de quartz de 0,2 cm², la force du ressort est comprise entre 2N et 3N. Il est par ailleurs aisé de modifier la charge du ressort en fonction de la taille du quartz en jouant sur la longueur de la 20.

Avantageusement, un capot 32 est prévu pour recouvrir le moyen de retenue et assurer l'étanchéité au niveau de l'alésage du bouchon 4.

Dans l'exemple représenté, particulièrement adapté à la réalisation d'une microbalance, le boîtier comporte également un passage latéral 34 visible sur les figures 1, 2, 3B et 4 pour le montage de la lame de quartz 14, ce passage 34 comporte une première portion de plus petite section 35.1 correspondant à celle de la lame de quartz et des métallisations, et une deuxième portion de plus grande section 35.2.

Sur les figures 1 et 2, on peut voir la lame 14 dans le support, reposant sur l'épaulement 12. Le quartz est introduit dans le support par le passage 34.

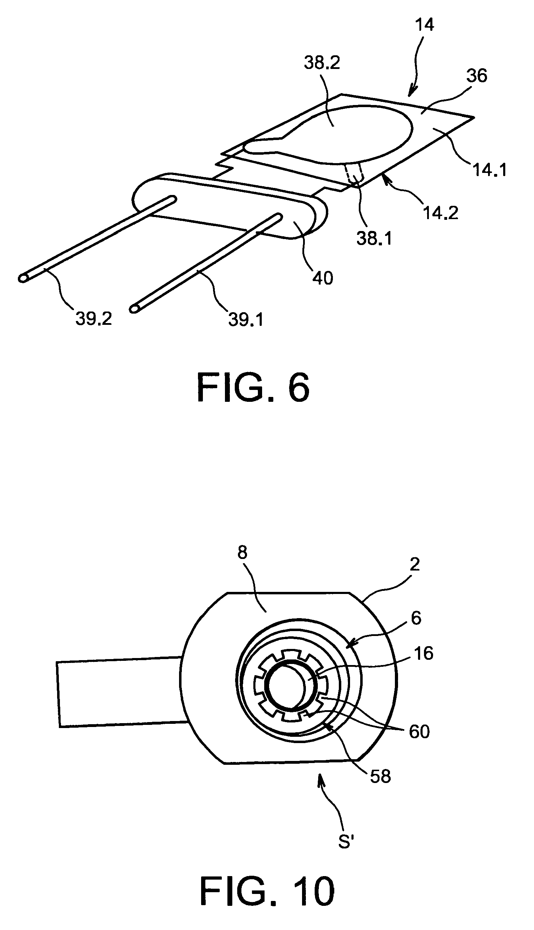

Sur la figure 6, on peut voir un exemple de lame utilisée pour une microbalance à quartz. La lame 14 comporte une lame de quartz 36 munie sur ses deux faces d'une métallisation 38.1, 38.2 connectées à des broches 39.1, 39.2 destinées être connectées à une unité de traitement extérieure (non représentée) et permettant de mesurer les variations de résonance du quartz utilisées pour déterminer la variation de la masse.

Avantageusement, une partie transversale 40 relie les deux broches 39.1, 39.2, dont la forme coopère avec la forme de la portion de plus grande section 35.2 du passage latéral 34, cette partie transversale 40 obture le passage latéral 34

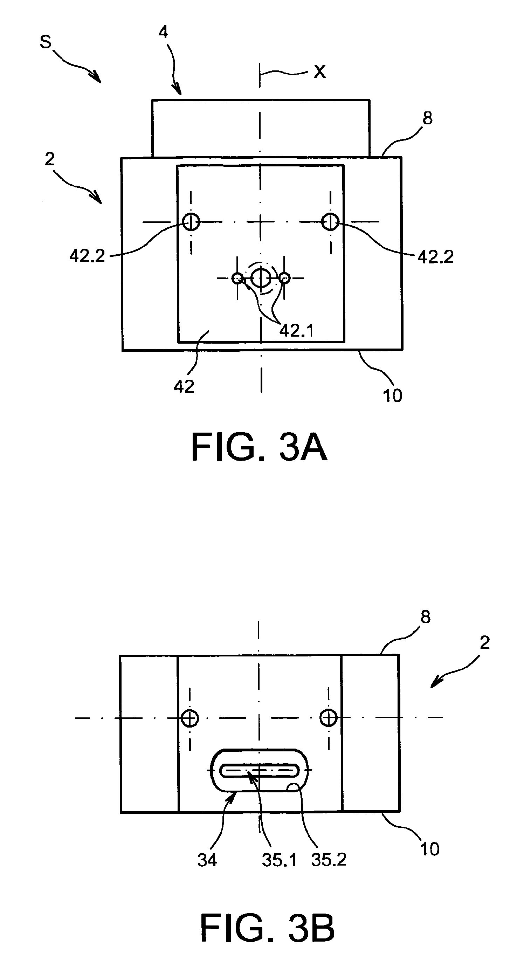

On peut prévoir une plaque de maintien 42 (figure 3A) fixée sur le support du côté du passage latéral 34 et immobilisant le capteur. La plaque de maintien 42 comporte deux perçages 42.1 pour les broches 39.1, 39.2, deux perçages 42.2 pour le passage de vis de fixation de la plaque sur le support. Le boîtier comporte des perçages correspondants pour les vis de fixation.

Le support S est par exemple réalisé en Téflon®. Il peut être réalisé en tout autre matériau. Le Téflon® présente l'avantage d'être inerte vis-à-vis de nombreuses substances chimiques qui peuvent servir lors de l'utilisation de la microbalance, par exemple, inerte à l'acide fluorhydrique.

Le support équipé d'une lame de quartz forme alors une microbalance. La microbalance selon la présente invention peut être utilisée en milieu gazeux par exemple dans l'air, en milieu liquide, ou en milieu liquide couplé aux techniques électrochimiques. Dans ce dernier cas, la microbalance est couplée à une cellule électrochimique

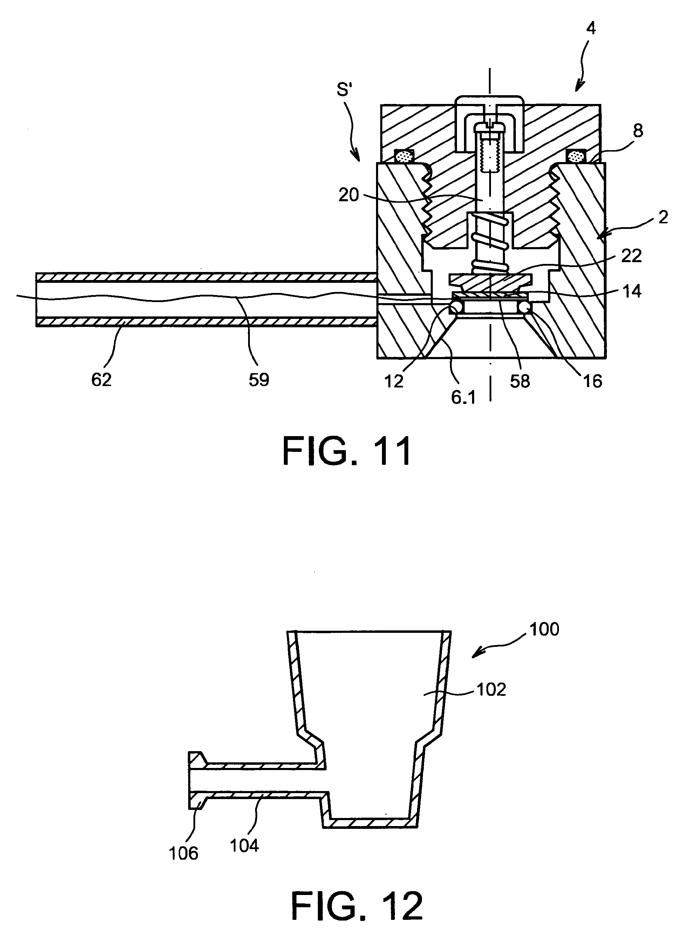

Le support S formant microbalance peut donc être utilisé avec une cellule électrochimique remplie des substances chimiques servant d'électrolyte. Le support selon la présente invention peut être utilisé avec une cellule électrochimique de l'état de la technique. Une telle cellule est représentée sur la figure 12.

La cellule 100 de l'état de la technique comporte un récipient 102 de forme sensiblement cylindrique ouvert au niveau de son extrémité supérieure pour l'introduction des substances formant le bain électrochimique. La cellule comporte également au niveau d'une partie inférieure un col 104 s'étendant latéralement destiné à la fixation de la microbalance, plus particulièrement du support S (non représentée). La solution électrochimique remplit le col 104 et entre en contact avec la lame 14. Le col 104 se termine par une collerette 106 contre laquelle vient en appui plan le support, un joint d'étanchéité est interposé entre la collerette 106 et le support de quartz S. Le support S est solidarisé sur le col 104 au moyen de deux brides de serrages (non représentées) reliées par des tiges filetées, les brides enserrant la collerette du col et une collerette du support.

Ce type de cellule présente plusieurs inconvénients.

D'une part, la cellule est généralement réalisée en verre, elle est donc fragile, en particulier au niveau du col relativement long. De plus le serrage au niveau du col provoque souvent des ruptures de celui-ci. D'autre part, la fixation du support sur le col est laborieuse. Et enfin, le col long forme une cavité dans laquelle des bulles de gaz peuvent être piégées et fausser les mesures.

Il est proposé une cellule électrochimique particulièrement adaptée à réalisation du montage d'une microbalance selon la présente invention.

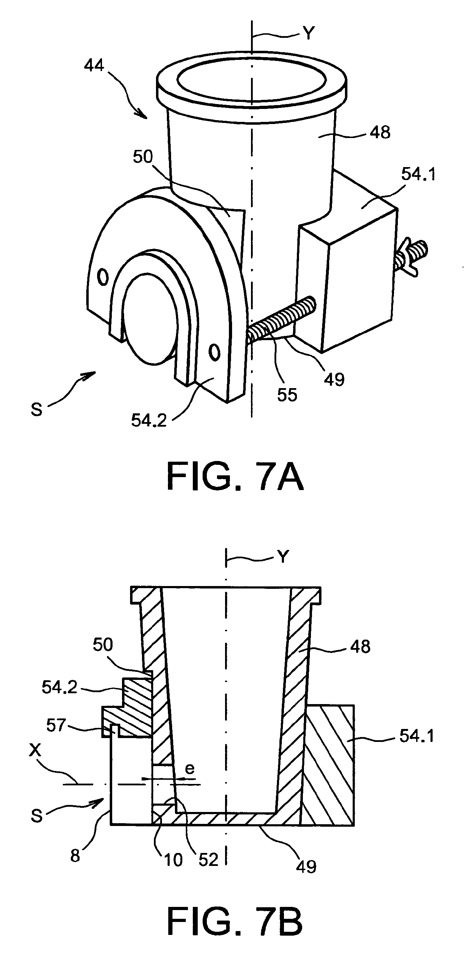

Sur les figures 7A et 7B, on peut voir la cellule 44 selon la présente invention à laquelle est fixée le support selon la présente invention.

Selon la présente invention, on supprime le col et, de fait, le serrage sur le col, ce qui permet de supprimer les risques de ruptures. Pour cela, la cellule comporte à l'endroit de la face extérieure d'où sortait le col, un méplat formant face d'appui plane pour le support.

Dans un premier mode de réalisation, la fixation s'effectue non plus en serrant la collerette du col mais en serrant le corps de cellule. Ainsi, il n'y a plus de risque de rupture de col lors du montage.

Sur les figures 7A et 7B, on peut voir un exemple préféré de réalisation d'une cellule selon la présente invention La cellule comporte une paroi latérale 48 et un fond 49 formant un récipient pour le bain électrochimique, la paroi latérale 48 présente une forme généralement cylindrique à diamètre extérieur constant. Selon l'invention, la paroi latérale 48 comporte un méplat 50 au niveau de sa partie inférieure dans laquelle est réalisé un orifice latéral 52 pour la mise en place du capteur et la mise en contact avec le bain. La face 10 du support vient en appui plan sur le méplat 50. Un joint d'étanchéité (non représenté) est interposé entre le support et la cellule

Deux brides de serrage sont prévues 54.1, 54.2 enserrant le support et le corps, des tiges filetées 55 relient les deux brides 54.1, 54.2. Une collerette 57 est prévue sur le support S coopérant avec la bride 54.2 assurant le centrage du support.

L'épaisseur e de la paroi latérale 48 de la cellule 44 est choisie aussi faible que possible afin de minimiser la taille de la cavité qui est formée par l'orifice latéral 52. Cette épaisseur est choisie suffisamment épaisse pour supporter l'effort de compression produit par les tiges filetées au moyen des brides.

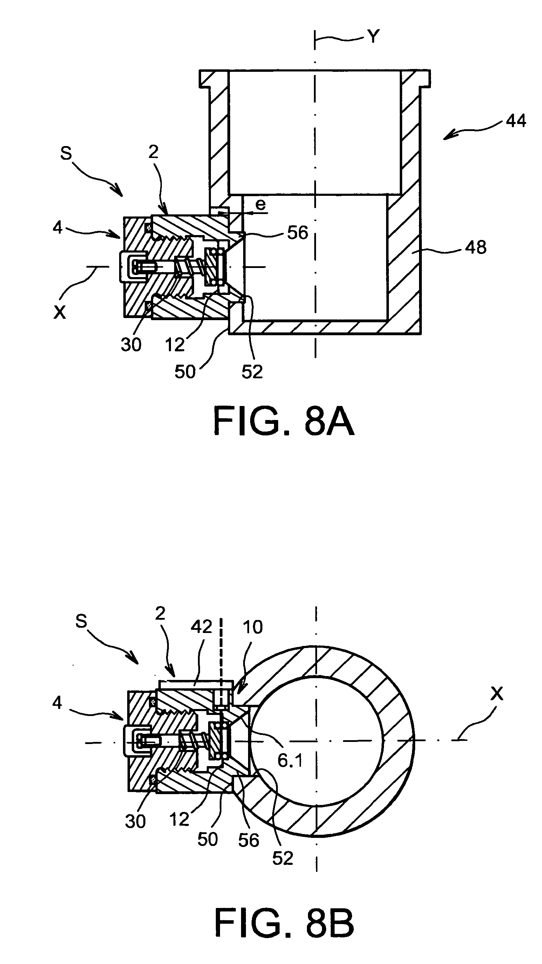

Dans un autre mode de réalisation particulièrement avantageux représenté sur les figures 8A et 8B, la face 10 du support S comporte une bordure 56 en saillie entourant la fenêtre d'accès à la lame, cette bordure 56 est elle-même entourée par une surface plane en retrait. La saillie offre des dimensions extérieures légèrement supérieures aux dimensions intérieures de l'orifice latéral. La saillie 56 est montée à force dans l'orifice latéral 52 et la surface plane l'entourant vient en appui contre le méplat 50. Ce montage assure le maintien du support sur la cellule et l'étanchéité de la connexion. Ce montage évite avantageusement de recourir à des brides de serrage.

On peut bien entendu prévoir une pince de serrage entre la cellule et le support, permettant de rendre le montage encore plus sûr.

Il est bien entendu que l'on peut prévoir une telle saillie et un serrage au moyen de brides, l'insertion de la saillie dans l'orifice latéral permettant un montage provisoire et facilitant la mise en place des brides.

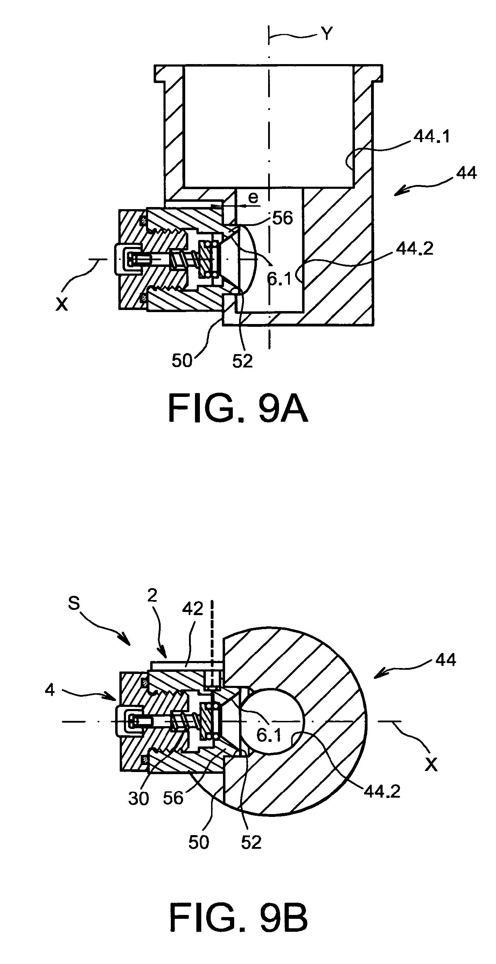

Sur les figures 9A et 9B, on peut voir un exemple de réalisation d'une cellule dans le cas où de faibles volumes sont mis en oeuvre. Le corps de cellule présente une partie inférieure 44.2 de petit diamètre intérieur, la profondeur du méplat 50 étant adaptée pour maintenir la distance entre le bain et le capteur aussi faible que possible.

La cellule selon la présente invention présente l'avantage de permettre un montage simple du support et donc la réalisation aisée d'une microbalance à quartz.

La cellule électrochimique est avantageusement réalisée en Téflon®, la rendant apte à être utilisée avec un grand nombre de substances. De plus, elle n'est pas fragile.

L'utilisation du Téflon® rend la réalisation du méplat très facile, par usinage ou directement lors du moulage.

La cellule des figures 7A à 9B selon la présente invention peut être utilisée avec un support à quartz de l'état de la technique.

Le principe de fonctionnement d'une microbalance à quartz étant bien connu, nous ne le détaillerons pas dans la présente description.

Le support de la figure 2 présente l'avantage de permettre un remplacement rapide et aisé de la lame de quartz. Par ailleurs, la lame de quartz requiert un positionnement précis qui est obtenu facilement grâce à la présente invention.

De manière avantageuse, on peut prévoir en plus un pion de serrage venant en appui entre les deux broches 39.1 et 39.2 sur la partie transversale 40, pour éviter de déplacer la lame lorsque que l'on manipule les broches 39.1, 39.2.

Sur les figures 10 et 11, on peut voir un support S' selon la présente invention utilisé en tant que porte-échantillon. Le support S' selon la présente invention est particulièrement à une telle application puisqu'il offre une étanchéité globale, i.e. au niveau de la face avant au niveau de la fenêtre et au niveau de la face arrière fermée par le bouchon. Par conséquent, le support selon la présente invention peut être plongé entièrement dans une solution.

Dans cette application, la lame 14 est formée par un substrat, par exemple en silicium sur lequel est déposé un film formant l'échantillon à analyser. Ce film est un matériau conducteur électrique ou semi-conducteur. Dans ce cas, la lame 14 est beaucoup moins fragile que dans le cas de la microbalance à quartz. La lame 14 a alors la forme de pastille et ne comporte pas de broches. La lame 14 est alors introduire directement dans le passage 6 du côté 8 du support S' et vient reposer sur l'épaulement 12. Par conséquent, le support S' ne requiert pas de passage latéral pour l'introduction de l'échantillon, ce qui réduit les risques d'entrée de liquide dans la porte-échantillon. Le support S' comporte un passage pour des fils électriques mais ceux-ci ne requièrent pas de démontage, l'étanchéité est donc facilement réalisable.

Le support S' comporte un contact électrique 58 destiné à venir en contact avec l'échantillon pour mesurer les transferts de charge entre l'échantillon et le liquide.

Le contact électrique 58 est prévu sur l'épaulement 12. Par conséquent, la lame repose sur le contact électrique 58, plus particulièrement la face portant l'échantillon est en appui contre le contact électrique 58.

Le contact électrique est par exemple réalisé au moyen d'une rondelle de cuivre connectée par un fil conducteur à une unité de traitement.

De manière avantageuse, le contact électrique 58 est formé par une rondelle dont le contour intérieur est découpé de sorte à former des languettes 60. Les languettes 60 sont légèrement pliées de sorte à former un tronc de cône, ainsi le contact électrique entre l'échantillon et les languettes est amélioré, les languettes 60 ainsi configurées formant un ressort.

L'épaisseur des languettes 60 est choisie en fonction de l'effort transmis par le ressort 30. Le nombre de languettes dépend de la surface de travail, i.e. de la surface de la fenêtre de travail. A titre d'exemple uniquement, pour un échantillon de 1 cm², on prévoit 8 languettes de 80 µm d'épaisseur.

Un joint 16 est prévu entre l'échantillon et l'épaulement 12 pour assurer l'étanchéité du porte-échantillon vis-à-vis de la solution. Le joint 16 peut soit être formé par un joint torique rapporté, soit par un bourrelet faisant saillie de l'épaulement 12. Cette dernière réalisation permet de simplifier le montage, le risque d'oubli du joint ou d'un joint défectueux est supprimé.

Le contact électrique 58 est connecté à des fils 59 pour transmettre les informations électriques récoltées à l'interface échantillon-liquide.

Sur les figures 10 et 11, le porte-échantillon est configuré sous la forme d'une canne, le support se prolongeant latéralement par une tige 62 creuse dans laquelle court le fil électrique. La tige creuse est reliée de manière étanche au support S'. Cette canne peut être plongée directement dans une solution, sa manipulation est donc facilitée.

Le dispositif de maintien de la lame 14 est similaire à celui décrit pour la microbalance. Par contre, le joint torique 28 peut être supprimé, la tête 22 pouvant appuyer directement sur la lame par une surface sphérique permettant une répartition égale des efforts sur le joint, plus particulièrement sur le substrat, puisque ce ne sont pas les vibrations que l'on souhaite mesurer dans ce cas. Par ailleurs, la lame est beaucoup moins fragile.

Ce porte-échantillon présente l'avantage, par rapport aux porte-échantillons de l'état de la technique, d'assurer un contact électrique directement avec l'échantillon à analyser, i.e. le film déposé sur le substrat, ce qui permet de limiter les pertes d'information. Au contraire, dans les porte-échantillons de l'état de la technique, le contact électrique se fait sur la face arrière du substrat, il y a alors une perte d'information à travers le substrat.

Le porte-échantillon peut également être utilisé avec une cellule électrochimique de l'état de la technique ou telles que décrites précédemment et représenté sur les figures 7A, 7B, 8A, 8B, 9A et 9B.

Il est bien entendu que le support selon la présente invention peut être fixé à une plaque sur laquelle d'autres éléments seraient fixés.

## Revendications

1. Support (S) pour une lame (14) en matériau conducteur électrique ou semi-conducteur dont une face (10) est destinée à être mise en contact avec un milieu liquide ou gazeux, ledit support (S) comportant
- une première pièce (2) munie d'un passage central (6) traversant d'axe longitudinal (X), ledit passage (6) comportant au moins une première et une deuxième portion de diamètres différents se raccordant par un épaulement (12), ledit épaulement (12) étant destiné à supporter ladite lame (14), - un moyen d'étanchéité (16) entre la lame (14) et l'épaulement (12)
- une deuxième pièce (4) pénétrant dans le passage (6) par l'extrémité opposée à celle destinée à voir la solution liquide, apte à maintenir la lame (14) sur l'épaulement (12), la première (2) et la deuxième (4) pièce coopérant par vissage, la deuxième pièce (4) comportant une première partie formant bouchon et t coopérant par vissage avec la première pièce (2), **caractérisé par** une
tige (20) montée coulissante par une extrémité dans la première partie, une tête (22) fixée à une deuxième extrémité de la tige (20) et destinée à exercer un effort sur la lame (14), et un moyen élastique (30) monté en réaction entre la tête (22) et la première partie, de sorte à exercer ledit effort axial sur la tête (22) en direction de l'épaulement (12).

2. Support selon la revendication 1, dans lequel une portion (6.1) du passage destinée à entrer en contact avec le liquide a une forme tronconique dont le plus grand diamètre est orienté en éloignement de l'épaulement (12).

3. Support selon la revendication 1 ou 2, dans lequel le moyen d'étanchéité (16) entre l'épaulement (12) et la lame (14) est un joint torique ou un bourrelet en saillie de l'épaulement (12) venu de matière avec la première pièce (2).

4. Support selon l'une des revendications 1 à 3, comportant un élément souple annulaire (28) étant interposé entre la tête (22) et la lame.

5. Support selon l'une des revendications 1 à 4, dans lequel la première (2) et la deuxième (4) pièce sont réalisées en Téflon®.

6. Support selon l'une des revendications 1 à 5, dans lequel un joint d'étanchéité (11) est prévu entre la première (2) et la deuxième (4) pièce.

7. Support selon l'une des revendications 1 à 6, dans lequel la première pièce (2) comporte un passage latéral (34) débouchant dans le passage central (6) au niveau de l'épaulement (12) pour la mise en place de la lame (14) et/ou le passage de moyens de connexion électrique.

8. Microbalance à quartz comportant un support selon l'une des revendications précédentes, et une lame de quartz munie d'une métallisation (38.1, 38.2) sur chacune de ses faces, formant la lame (14).

9. Microbalance à quartz selon la revendication 8 en combinaison avec les revendications 3 et 4, la lame de quartz (14) étant maintenue entre le moyen d'étanchéité (16) et l'élément souple (28), laissant la lame de quartz libre de vibrer.

10. Microbalance à quartz selon la revendication 7 ou 8, dans laquelle la première pièce (2) comporte un méplat sur sa périphérie extérieure dans la zone où débouche le passage latéral (34) et une plaque (42) obturant le passage latéral (34), ladite plaque (42) comportant des perçages (42.1) pour le passage de connexion électrique.

11. Porte-échantillon comportant un support selon l'une des revendications 1 à 7 et un substrat sous forme de lame recouvert sur l'une de ses faces d'un film à analyser formant la lame, ledit support (S') comportant un élément de contact électrique (58) disposé sur l'épaulement (12) et s'interposant entre le film et l'épaulement (12), le moyen d'étanchéité (16) étant entre l'épaulement (12) et la lame.

12. Porte-échantillon selon la revendication précédente, dans lequel l'élément de contact électrique (58) est une rondelle dont la périphérie intérieure est formée par des languettes (60), lesdites languettes (60) étant pliées de sorte à s'écarter de l'épaulement (12), permettant le contact électrique avec le film mince.

13. Porte-échantillon selon la revendication 11 ou 12, comportant une tige creuse (62) fixée sur la première pièce (2) au niveau du passage latéral (34), ladite tige (62) étant traversée par une connexion électrique (59) à l'élément de contact électrique (58).

14. Ensemble de mesure comportant un support selon l'une des revendications 1 à 7 et une cellule électrochimique (100, 44), sur laquelle le support (S) est fixé, la cellule électrochimique comportant une paroi latérale et un fond définissant un récipient et un orifice latéral (52) dans sa partie inférieure, le support (S) étant fixé sur la cellule électrochimique de sorte que la portion du passage destinée à être en contact avec le liquide soit en regard de l'orifice latéral (52).

15. Ensemble de mesure selon la revendication 14, dans la paroi latérale de la cellule électrochimique est munie d'un méplat (50) au niveau de l'orifice latéral (52), le support (S) étant directement en appui sur le méplat (50) tel que la distance entre le bain électrochimique et la face de la lame (14) soit réduite.

16. Ensemble de mesure selon la revendication 15, comportant des moyens de fixation du support en regard de l'orifice latéral, lesdits moyens de fixation (54.1, 54.2, 55) comportant un ensemble de deux brides (54.1, 54.2) reliées par des tirants (55) maintenant le support (S) contre la cellule électrochimique (44), une première bride (54.1) étant en appui sur une zone de la paroi latérale (48) de la cellule électrochimique à l'opposé de l'orifice latéral (52) et une deuxième bride (54.2) étant en appui sur le support (S) de sorte que l'effort de serrage s'exerce à travers la paroi latérale (48).

17. Ensemble de mesure selon la revendication précédente, dans laquelle la première bride (54.1) est fixée sur la paroi latérale (48).

18. Ensemble de mesure selon l'une des revendications 14 à 17, dans lequel le support (S) comporte une bordure en saillie (56) de la face (10) entourant le passage central (6), insérée à force dans l'orifice latéral (52) de la cellule électrochimique.

19. Ensemble de mesure selon l'une des revendications 14 à 18, dans lequel la cellule électrochimique est en Téflon®.

## Claims

1. A support (S) for a plate (14) in an electrically conducting or semiconducting material, one face (10) of which is intended to be put into contact with a liquid or gas medium, said support (S) comprising
- a first part (2) provided with a central through-passage (6) with a longitudinal axis (X), said passage comprising at least one first and one second portion with a different diameter being connected together through a shoulder (12), said shoulder (12) being intended to support said plate (14),
- a sealing means (6) between the plate (14) and the shoulder (12),
- a second part (4) penetrating into the passage (6) with the end opposite to the one intended to be exposed to the liquid solution, capable of maintaining the plate (14) on the shoulder (12), the first (2) and the second (4) part cooperating by screwing, the second part (4) comprising a first portion forming a plug and cooperating by screwing with the first part (2), **characterized in that** a slidably mounted rod (20) by one end in the first portion, a head (22) attached to a second end of the rod (20) and intended to exert a force on the plate (14), and an elastic means (30) mounted in reaction between the head (22) and the first portion, so as to exert said axial force on the head (22) towards the shoulder (12),

2. The support according to claim 1, wherein a portion (6.1) of the passage intended to come into contact with the liquid has a frusto-conical shape, the largest diameter of which is oriented away from the shoulder (12).

3. The support according to claim 1 or 2, wherein the sealing means (16) between the shoulder (12) and the plate (14) is an O-ring gasket or a protruding bead of the shoulder (12) formed with the first part in the same material (2).

4. The support according to one of claims 1 to 3, wherein annular resilient element (28) is provided between the head (22) and the plate.

5. The support according to one of claims 1 to 4, wherein the first (2) and the second (4) part are made in Teflon®.

6. The support according to one of claims 1 to 5, wherein a seal gasket (11) is provided between the first (2) and the second (4) part.

7. The support according to one of claims 1 to 7, wherein the first part (2) includes a side passage (34) opening out into the central passage (6) at the shoulder for placing the plate(14) and/or letting through electric connection means.

8. Quartz microbalance comprising a support according to one of the rpevious claims, and a quartz plate provided with metallization (38.1) on each of its faces, forming the plate (14).

9. Quartz microbalance according to claim 8 in combination with claims 3 and 4, the quartz plate (14) being hold between the annular resilient element (16) and the sealing means (28) and being free to vibrate.

10. The quartz microbalance according to claim 7 or 8, wherein the first part (2) includes a flat portion of its outer periphery (34) in the area where the side passage (34) opens out and a plate (42) blocking the side passage (34), said plate (42) comprising bored holes (42.1) for letting through electric connections.

11. sample holder comprising a support according to one of claims 1 to 7 and a substrate as a plate covered on one of its faces with a film to be analyzed forming the plate, said support (S') comprising an electric contact element (58) positioned on the shoulder (12) and interposed between the film and the shoulder (2), the sealing means (16) being located between the shoulder (12) and the plate.

12. The sample holder according to the previous claim, wherein the electric contact element (58) is a washer, the inner periphery of which is formed by tabs (60), said tabs (60) being folded so as to move away from the shoulder (12), allowing electric contact with the thin film.

13. The sample holder according to claim 11 or 12, comprising a hollow rod (62) attached on the first part (2) at the side passage (34), said rod (62) being crossed by an electric connection (59) to the electric contact element (58).

14. A measurement assembly comprising a support according to one of claims 1 to 7 and an electrochemical cell (100, 44), on which the support (S) is attached, the electrochemical cell comprising a side wall and a bottom defining a container and a side orifice (52) in its lower portion, the support (S) being attached son the electrochemical cell so that the portion of the passage intended to be in contact with the liquid is facing the side orifice (52).

15. The measurement assembly according to claim 14, in the side wall of the electrochemical cell is provided with a flat portion (50) at the side orifice (52), the support (S) directly bearing upon the flat portion (50) so that the distance between the electrochemical bath and the face of the plate (14) is reduced.

16. The measurement assembly according to claim 15, comprising means for attaching the support facing the side orifice, said attachment means (54.1, 54.2, 55) comprising an assembly of two flanges (54.1, 54.2) connected through tie rods (55) maintaining the support (S) against the electrochemical cell (44), a first flange (54.1) bearing upon an area of the side wall (44) of the electrochemical cell opposite to the side orifice (52) and a second flange (54.2) bearing upon the support so that the clamping force is exerted through the side wall (48).

17. The measurement assembly according to the previous claim, wherein the first flange (54.1) is attached on the side wall (48).

18. The measurement assembly according to one of claims 14 to 17, wherein the support (S) includes a protruding edge (56) of the face (10) surrounding the central passage (6), forcibly inserted into the side orifice (52) of the electrochemical cell.

19. The measurement assembly according to one of claims 14 to 18, wherein the electrochemical cell is in Teflon®.

## Patentansprüche

1. Halterung (S) für ein Blatt (14) aus einem elektrischen Leiter- oder Halbleitermaterial, das mit einer Seite (10) zur Berührung mit einem flüssigen oder gasförmigen Medium vorgesehen ist, wobei die Halterung (S) umfaßt:
- ein erstes Teil (2), das mit einem zentralen Durchlass (6) entlang einer Längsachse (X) versehen ist, wobei dieser Durchlaß (6) wenigstens einen ersten und einen zweiten Bereich unterschiedlichen Durchmessers umfaßt, die durch eine Schulter (12) verbunden sind, die als Träger für das genannte Blatt (14) vorgesehen ist,
- ein Dichtungsmittel (16) zwischen dem Blatt (14) und der Schulter (12)
- ein zweites Teil (4), das in den Durchlaß (6) durch das Ende hineinragt, welches dem Ende entgegengesetzt ist, durch welches die flüssige Lösung sichtbar ist, und das das Blatt (14) auf der Schulter (12) halten kann, wobei das erste (2) und das zweite Teil (4) mittels Verschraubung zusammenwirken und das zweite Teil (4) einen einen Stopfen bildenden ersten Teilbereich aufweist, der mit dem ersten Teil (2) mittels Verschraubung zusammenwirkt,
**gekennzeichnet durch** eine Stange (20), der in dem ersten Teil von dessen einem Ende her gleitend verschieblich ist, einen an einem zweiten Ende der Stange (20) befestigten Kopf (22) zur Ausübung einer Kraft auf das Blatt (14), sowie ein zwischen dem Kopf (22) und dem ersten Teilbereich reaktiv so angeordnetes elastisches Mittel (30), daß es die genannte
axiale Kraft auf den Kopf (22) in Richtung zu der Schulter (12) ausübt.

2. Halterung nach Anspruch 1, bei welcher ein zum Kontakt mit der Flüssigkeit bestimmter Bereich (6.1) des Durchlasses in Form eines Kegelstumpfs ausgebildet ist, dessen großer Durchmesser von der Schulter (12) abgewandt ist.

3. Halterung nach Anspruch 1 oder Anspruch 2, bei welcher das Dichtungsmittel (16) zwischen der Schulter (12) und dem Blatt (14) einen Dichtungsring ist, der von der mit dem ersten Teil (2) einstückige Schulter (12) vorspringt.

4. Halterung nach einem der Ansprüche 1 bis 3, die ein biegsames ringförmiges Element (28) aufweist, das zwischen dem Kopf (22) und dem Blatt angeordnet ist.

5. Halterung nach einem der Ansprüche 1 bis 4, bei welcher das erste (2) und das zweite Teil (4) aus Teflon® hergestellt ist.

6. Halterung nach einem der Ansprüche 1 bis 5, bei welcherein Dichtungsring (11) zwischen dem ersten Teil (2) und dem zweiten Teil (4) vorgesehen ist.

7. Halterung nach einem der Ansprüche 1 bis 6, bei welcher das erste Teil (2) einen seitlichen Durchlaß (34) aufweist, der in den zentralen Durchlass (6) auf Höhe der Schulter (12) mündet, zur Anbringung des Blatts (14) und/oder zum Durchtritt elektrischer Verbindungen.

8. Quarz-Mikrowaage mit einem einer Halterung nach einem der vorhergehenden Ansprüche, sowie mit einem Quarzblatt, das auf jeder seiner Seiten mit einer Metallisierung (38.1, 38.2) versehen ist und das Blatt (14) bildet.

9. Quarz-Mikrowaage nach Anspruch 8 in Kombination mit den Ansprüchen 3 und 4, wobei das Quarzblatt (14) zwischen dem Dichtungsmittel (16) und dem biegsam-elastischen Element (28) gehalten ist und das Quarzblatt frei schwingbar verbleibt.

10. Quarz-Mikrowaage nach Anspruch 7 oder Anspruch 8, bei welcher das erste Teil (2) an seinem Außenumfang in der Mündungszone des seitlichen Durchlasses (34) eine Abflachung aufweist sowie eine Platte (42), welche den seitlichen Durchlaß (34) verschließt, und wobei diese Platte (42) Bohrungen (42.1) für den Durchtritt elektrischer Verbindungen aufweist.

11. Probenträger mit einer Halterung nach einem der Ansprüche 1 bis 7 und einem Substrat in Form eines Blatts, das an einer seiner Flächen mit einem zu analysierenden Film überzogen ist, unter Bildung des Blatts, wobei die Halterung (S') ein elektrisches Kontaktelement (58) aufweist, das auf der Schulter (12) angeordnet ist und zwischen dem Film und der Schulter (12) liegt, wobei sich das Dichtungsmittel (16) zwischen der Schulter (12) und dem Blatt befindet.

12. Probenträger nach dem vorhergehenden Anspruch, in welchem das elektrische Kontaktelement (58) eine Rondelle ist, deren Innenumfang von Zungen (60) gebildet wird, wobei diese Zungen so von der Schulter (12) weg gebogen sind, daß der elektrische Kontakt mit dem dünnen Film gestattet ist.

13. Probenträger nach Anspruch 11 oder 12, der eine hohle Stange (62) aufweist, welcher an dem ersten Teil (2) auf der Höhe des seitlichen Durchlasses (34) befestigt ist, wobei durch diese Stange eine elektrische Verbindung (59) zu dem elektrischen Kontaktelement (58) geführt ist.

14. Meßaggregat mit einer Halterung nach einem der Ansprüche 1 bis 7 und einer elektrochemischen Zelle (100, 44), auf welcher die Halterung befestigt ist, wobei die elektrochemische Zelle eine Seitenwandung und einen Boden umfaßt, die einen Behälter und eine seitliche Mündungsöffnung (52) in dessen unterem Teil definieren, wobei die Halterung (S) so an der elektrochemischen Zelle befestigt ist, daß der zum Kontakt mit der Flüssigkeit bestimmte Bereich des Durchlasses mit der Mündungsöffnung ausgerichtet ist.

15. Meßaggregat nach Anspruch 14, bei welchem die seitliche Wandung der elektrochemischen Zelle auf der Höhe der seitlichen Mündungsöffnung (52) mit einer Abplattung (50) versehen ist und die Halterung (S) direkt gegen die Abplattung (50) anliegt, derart daß die Entfernung zwischen dem elektrochemischen Bad und der Oberfläche des Blatts (14) verringert ist.

16. Meßaggregat nach Anspruch 15, mit Befestigungsmitteln für die Halterung in Ausrichtung mit der seitlichen Mündungsöffnung, wobei die genannten Befestigungsmittel (54,1, 54.2, 55) ein Aggregat aus zwei durch Bolzen (55) miteinander verbundenen Bügeln (54.1, 54.2) umfaßt, welches die Halterung (S) gegen die elektrochemische Zelle (44) anliegend hält, wobei ein erster Bügel (54.1) gegen eine Zone der seitlichen Wandung (48) der elektrochemischen Zelle gegenüber der seitlichen Mündungsöffnung (52) anliegt und ein zweiter Bügel (54.2) gegen die Halterung (S) anliegt, derart daß die Klemmkraft über die seitliche Wandung (48) ausgeübt wird.

17. Meßaggregat nach dem vorhergehenden Anspruch, bei welchem der erste Bügel (54.1) an der Seitenwandung befestigt ist.

18. Meßaggregat nach einem der Ansprüche 14 bis 17, bei welchem die Halterung (S) eine an der den zentralen Durchlaß (6) umgebenden Oberfläche vorstehende Bördel (56) aufweist, die unter Kraftanwendung in die seitliche Mündungsöffnung (52) der elektrochemischen Zelle eingedrückt ist.

19. Meßaggregat nach einem der Ansprüche 14 bis 18, bei welchen die elektrochemische Zelle aus Teflon® besteht.
